# FASCICULE DE BREVET EUROPEEN

(11) **EP 3 168 092 B1**
(45) Date de publication et mention de la délivrance du brevet: **02.01.2019**
(21) Numéro de dépôt: 16193426.0
(22) Date de dépôt: 12.10.2016
(51) Int. Cl.: B60S 1/40, B60S 1/38

(54) **ORGANE POUR UN SYSTÈME DE CONNEXION D'UN BALAI D'ESSUIE-GLACE À UN BRAS D'ENTRAÎNEMENT**
ORGAN FÜR EIN VERBINDUNGSSYSTEM EINES WISCHERBLATTS AN EINEN SCHEIBENWISCHERARM
ELEMENT FOR A SYSTEM FOR CONNECTING A WINDSCREEN WIPER BLADE HOLDER TO A DRIVE ARM

(30) Priorité: 13.11.2015 FR 1560915
(43) Date de publication de la demande: 17.05.2017
(73) Titulaire: Valeo Systèmes d'Essuyage, 78322 Le Mesnil Saint Denis (FR)
(72) Inventeur: ESPINASSE, Philippe, 63114 COUDES (FR)
(74) Mandataire: Vincent, Catherine Marie Marguerite

(56) Documents cités:
- EP-A2- 2 813 404
- DE-A1- 10 100 847
- DE-A1-102010 003 372
- DE-A1-102010 030 880
- US-A1- 2008 092 320

## Description

### DOMAINE TECHNIQUE

La présente invention concerne notamment un organe pour un système de connexion d'un balai d'essuie-glace à un bras d'entraînement.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entraînement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade*" (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est un organe qui est solidarisé au balai et qui est en général fixé directement sur la lame racleuse ou sur la *flat blade,* alors que l'adaptateur est un organe solidaire du bras. L'adaptateur est une pièce intermédiaire qui permet la liaison et la fixation du connecteur sur le bras d'entraînement. Il est en général configuré pour être engagé dans une tête ou pièce terminale en forme de chape et à section transversale en U du bras d'entraînement.

Le connecteur et l'adaptateur comprennent chacun des moyens d'articulation configurés pour coopérer avec des moyens complémentaires de l'autre organe, pour définir au moins un axe transversal de pivotement du connecteur vis-à-vis de l'adaptateur, qui est un axe de pivotement du balai vis-à-vis du bras. Dans la technique actuelle, l'un des organes, tel que le connecteur, comprend en général un axe physique sensiblement cylindrique qui définit l'axe d'articulation et qui est reçu dans un logement de forme complémentaire de l'autre organe.

L'adaptateur comporte en général un corps configuré pour être engagé dans la pièce terminale du bras de façon à ce que ce corps s'étende au moins en partie entre deux jambes latérales sensiblement parallèles de la pièce terminale. Le corps de l'adaptateur est relié à une extrémité à un carénage ou capotage, appelée couramment tête ou casquette, sur laquelle l'extrémité libre de la pièce terminale vient en butée. Enfin, le corps de l'adaptateur comprend en général un bouton d'actionnement qui est engagé par encliquetage élastique dans un orifice ou une encoche de la pièce terminale, lorsque cette dernière est en butée sur la tête, afin de verrouiller l'adaptateur vis-à-vis de la pièce terminale dans cette position.

Un adaptateur permet d'associer un balai à un type particulier de pièce terminale ou de bras. Dans le cas des pièces terminales précitées à section en U par exemple, il en existe plusieurs variétés. Ces variétés sont très proches en apparence mais diffèrent les unes des autres par des dimensions et en particulier par leurs largeurs ou dimensions latérales, la largeur d'une pièce terminale étant définie par la distance entre les jambes latérales de la pièce terminale et plus exactement par la distance entre les faces externes de ces jambes latérales. Elles varient également par les positions des orifices ou des encoches destinés à coopérer avec les boutons poussoirs de l'adaptateur. EP-A-2813404 montre le préambule de la revendication 1.

Dans la technique actuelle, il existe autant de variétés d'adaptateurs que de variétés de pièces terminales ou d'extrémités de bras d'entraînement, ce qui n'est pas pratique ni économique. Il existe également différentes variétés de connecteurs, par exemple des connecteurs pouvant être solidarisés à au moins une vertèbre du balai, ou des connecteurs pouvant être solidarisés à une plateforme supérieure du balai.

Il existe donc un réel besoin d'organes « universels » pour un système de connexion d'un balai d'essuie-glace à un bras d'entraînement, permettant un montage sur différentes zones du balai et sur au moins deux, voire plus, pièces terminales de bras d'essuie-glace.

L'invention vise à atteindre ces objectifs.

### EXPOSE DE L'INVENTION

L'invention a ainsi pour objet un organe pour un système de connexion d'un balai d'essuie-glace à un bras d'entraînement, ledit organe étant configuré pour être solidarisé audit balai ou audit bras et comprenant des moyens de rotation configurés pour coopérer avec des moyens complémentaires d'un autre organe du système de connexion pour définir un axe de rotation de l'organe vis-à-vis du second organe, ledit axe de rotation étant destiné à être l'axe de rotation dudit balai vis-à-vis dudit bras.

Dans l'organe selon l'invention, lesdits moyens de rotation comprennent une protubérance, disposée d'un côté d'un plan longitudinal médian dudit organe et apte à coopérer avec une cavité de l'autre organe, ainsi qu'une cavité, disposée de l'autre côté dudit plan et apte à coopérer avec une protubérance de l'autre organe, l'organe étant asymétrique par rapport audit plan.

Le plan longitudinal médian est le plan longitudinal passant par le milieu de l'organe, le milieu étant défini par rapport aux deux extrémités latérales de l'organe.

L'organe est asymétrique, le plan longitudinal médian (perpendiculaire au pare-brise à essuyer en configuration opérationnelle de l'essuie-glace) ne constitue pas le plan de symétrie longitudinal de l'organe. La protubérance et la cavité peuvent ainsi être asymétriques par rapport audit plan. Typiquement, la cavité est formée dans l'épaisseur de l'organe, tandis que la protubérance est disposée en saillie de l'organe.

Ainsi, avantageusement, l'organe selon l'invention permet de fournir un connecteur et un adaptateur qui peuvent coopérer l'un avec l'autre pour former le système de connexion du balai d'essuie-glace au bras d'entraînement. Le connecteur peut être configuré pour être solidarisé à au moins une vertèbre du balai ou à une plateforme supérieure du balai, tandis que l'adaptateur peut être un adaptateur pour au moins deux bras d'entraînement différents, tels que par exemple au moins un bras à extrémité ou pièce terminale en U, au moins un bras tige, ou encore au moins un bras à verrouillage latéral (de l'anglais « side-lock »).

La protubérance est typiquement un axe physique sensiblement cylindrique et ladite cavité est typiquement un logement de forme complémentaire de ladite protubérance.

La protubérance peut comprendre un trou traversant.

Ledit organe peut être un connecteur destiné à être solidarisé au balai.

L'organe peut dans ce cas comprendre une embase munie d'une zone de solidarisation à au moins une vertèbre du balai.

L'organe (connecteur) peut comprendre une embase munie de moyens de clipsage à une plate-forme du balai.

L'organe (connecteur) peut comprendre une embase surmontée d'un flanc, la cavité étant disposée dans le flanc et la protubérance étant issue du flanc.

Ledit organe peut également être un adaptateur destiné à être solidarisé au bras d'entraînement.

L'organe (adaptateur) peut ainsi présenter une section en « U » formée par une base et deux flancs latéraux délimitant un logement, la protubérance étant issue d'un flanc latéral et la cavité étant disposée dans l'autre flanc latéral.

La protubérance peut s'étendre dans le logement.

La protubérance peut comprendre une partie tronquée ou chanfreinée.

L'organe (adaptateur) peut comprendre un bouton d'actionnement destiné à être engagé par encliquetage élastique dans un orifice d'une pièce terminale du bras d'entraînement.

L'organe (adaptateur) peut être configuré pour être solidarisé à un bras d'entraînement à pièce terminale à section en « U ».

L'organe (adaptateur) peut être configuré pour être solidarisé à un bras d'entraînement de type bras tige.

L'organe (adaptateur) peut être configuré pour être solidarisé à un bras d'entraînement à verrouillage latéral.

L'invention a également pour objet un système de connexion d'un balai d'essuie-glace à un bras d'entraînement. Le système de connexion selon l'invention comprend au moins un organe décrit ci-dessus.

Le système de connexion peut en particulier comprendre un connecteur décrit ci-dessus et un adaptateur décrit ci-dessus.

L'invention a enfin pour objet un balai d'essuie-glace ou bras d'entraînement, comprenant ou portant un organe décrit ci-dessus ou un système de connexion décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en perspective d'un essuie-glace, cet essuie-glace comportant un balai d'essuie-glace et un bras d'entraînement du balai, qui sont reliés l'un à l'autre par un système de connexion,
- la figure 2 est une vue schématique de face d'un connecteur et d'un adaptateur selon l'invention,
- les figures 3 et 4 sont des vues en perspective d'un connecteur selon l'invention, conformément à un premier mode de réalisation,
- les figures 5 et 6 sont des vues en perspective d'un connecteur selon l'invention, conformément à un deuxième mode de réalisation,
- les figures 7 et 8 sont des vues en perspective d'un adaptateur selon l'invention, conformément à un premier mode de réalisation,
- les figures 9 et 10 sont des vues en perspective d'un adaptateur selon l'invention, conformément à un deuxième mode de réalisation,
- les figures 11 et 12 sont des vues en perspective d'un adaptateur selon l'invention, conformément à un troisième mode de réalisation, et
- les figures 13 et 14 sont des vues en perspective d'un adaptateur selon l'invention, conformément à un quatrième mode de réalisation.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

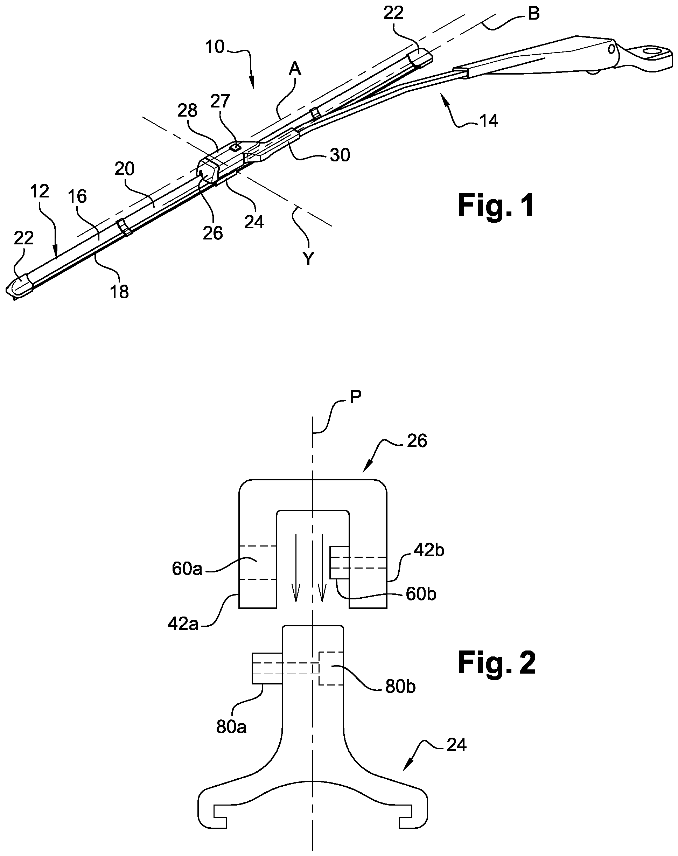

Il est illustré à la figure 1 un essuie-glace 10 comportant notamment un balai 12 et un bras 14 d'entraînement du balai 12.

Le balai 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai 12 comprend sensiblement en son milieu un connecteur 24 qui est un premier organe de connexion du bras 14 au balai 12. Un adaptateur 26 solidaire du bras 14 est monté sur le connecteur 24 de façon à garder un degré de liberté en pivotement autour d'un axe d'articulation Y qui est un axe transversal sensiblement perpendiculaire à l'axe longitudinal du balai 12. L'adaptateur 26 est un deuxième organe de connexion du bras 14 au balai 12. Ce degré de liberté autorise un pivotement du balai 12 vis-à-vis du bras 14 et permet ainsi au balai de suivre la courbure du pare-brise lors de ses déplacements. L'adaptateur 26 peut être désolidarisé du bras 14 par appui sur un bouton d'actionnement, ici un bouton poussoir 27, porté par l'adaptateur 26.

Le bras 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai 12 au bras 14 et en particulier à une tête ou pièce terminale 28 du bras qui peut être formée d'une seule pièce avec le bras ou rapportée et fixée sur celui-ci.

Dans l'exemple représenté, la pièce terminale 28 du bras forme une chape à section transversale sensiblement en U.

La pièce terminale 28 a une forme allongée dont l'axe d'allongement A est en général sensiblement parallèle à l'axe d'allongement ou longitudinal du balai 12. La pièce terminale 28 comprend une partie 30 de liaison au reste du bras 14, par exemple par sertissage. Cette partie 30 a une forme générale allongée et s'étend le long d'un axe B sensiblement parallèle à l'axe A et à distance de cet axe, comme cela est visible à la figure 1. La partie 30 est reliée à une extrémité arrière ou intérieure du reste de la pièce terminale 28.

Conformément à l'invention, et tel qu'illustré schématiquement à la figure 2, le connecteur 24 comprend, d'un côté du plan longitudinal médian P, une protubérance 80a, et de l'autre côté du plan longitudinal médian P, une cavité 80b. De la même façon, l'adaptateur 26 comprend, d'un côté d'un plan longitudinal médian P, une protubérance 60a, et de l'autre côté du plan longitudinal médian P, une cavité 60b.

La protubérance 80a du connecteur 24 et la cavité 60a de l'adaptateur 26 sont situées du même côté. De la même façon, la protubérance 60b de l'adaptateur 26 et la cavité 80b du connecteur 24 sont situées du même côté. Ainsi, la protubérance 80a du connecteur 24 coopère par encliquetage élastique avec la cavité 60a de l'adaptateur 26, tandis que la protubérance 60b de l'adaptateur 26 coopère par encliquetage élastique avec la cavité 80b du connecteur 24, ce qui permet de réaliser simultanément la solidarisation du connecteur 24 à l'adaptateur 26 et la formation de l'axe de rotation du balai.

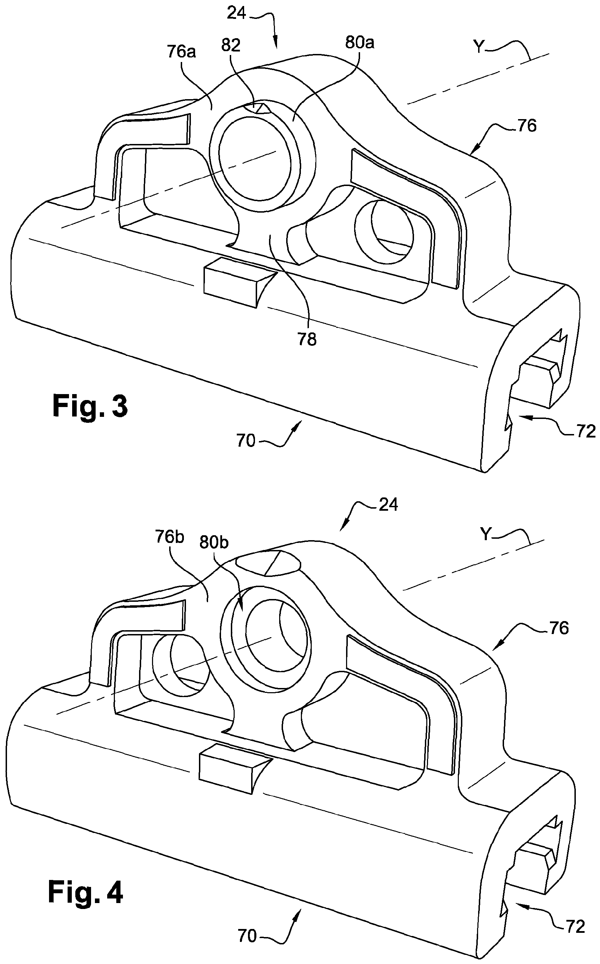

L'assemblage de l'adaptateur 26 sur le connecteur 24 est réalisé simplement par une translation verticale illustrée par les flèches. Lors de la translation, les flancs latéraux 42a, 42b de l'adaptateur sont contraints de se déformer en s'écartant l'un de l'autre. Cette opération est poursuivie jusqu'à ce que les protubérances 60b, 80a s'engagent par encliquetage ou retour élastique dans les cavités 80b, 60a. L'adaptateur 26 est alors fixé au connecteur 24 et peut en outre pivoter sur lui autour de l'axe de pivotement Y (figure 3) par coopération des protubérances 60b, 80a et des cavités 80b, 60a. Les cavités 80b, 60a ont un diamètre interne sensiblement égal ou légèrement supérieur à celui des protubérances 60b, 80a pour autoriser la rotation entre l'adaptateur 26 et le connecteur 24.

Les figures 3 et 4 illustrent un connecteur 24 selon l'invention, conformément à un premier mode de réalisation. Dans ce mode de réalisation, le connecteur 24 est agencé pour être rendu solidaire, par exemple par sertissage, du balai 12. Le connecteur 24 assure une liaison mécanique dite complète avec le balai 12, en ce sens qu'il n'existe pas de degré de liberté. Le connecteur 24 peut également assurer une fonction de transport et de distribution d'un liquide de lavage du pare-brise du véhicule.

Le connecteur 24 comprend une embase 70 qui s'étend longitudinalement et transversalement. Cette embase 70 comprend une zone de solidarisation 72 sur le balai 12, et plus particulièrement sur au moins une vertèbre de ce balai. Cette zone de solidarisation 72 prend par exemple la forme d'une saignée ménagée dans l'embase 70, cette saignée étant bordée par deux crochets aptes à venir en prise sur le balai 12.

Le balai 12 peut comprendre deux vertèbres parallèles et coplanaires qui sont espacées l'une de l'autre pour définir un espace de logement de la lame d'essuyage 18 ou du corps 16 du balai. Chaque vertèbre comprend un bord longitudinal, opposé à la lame 18, qui est reçu dans la saignée du connecteur 24.

L'embase 70 est surmontée d'un flanc 76, par exemple issu de matière avec l'embase. Ce flanc 76 présente une dimension transversale inférieure à celle de l'embase et une dimension longitudinale sensiblement égale à celle de l'embase. Le flanc 76 est par exemple centré sur l'embase 70, selon l'axe de pivotement Y. Le flanc 76 peut présenter une ou plusieurs nervures 78 qui assurent un renforcement mécanique du flanc.

Le connecteur 24 et l'adaptateur 26 sont reliés mécaniquement par une liaison pivot. Conformément à l'invention, et en ce qui concerne le connecteur 24, cette liaison pivot est mise en oeuvre à l'aide d'une part d'une protubérance 80a, en saillie d'une face latérale 76a du flanc 76, et d'autre part, d'une cavité 80b réalisée dans le flanc 76 du connecteur, du côté de l'autre face latérale 76b du flanc 76. La protubérance 80a peut comprendre un évidement de manière à faciliter le guidage de la protubérance 80a dans la cavité 60a de l'adaptateur 26.

Le connecteur 24 décrit ci-dessus est avantageusement unitaire, c'est-à-dire constitué par une même matière synthétique. Ce connecteur peut ainsi être fabriqué au cours d'une unique opération de moulage, notamment par injection.

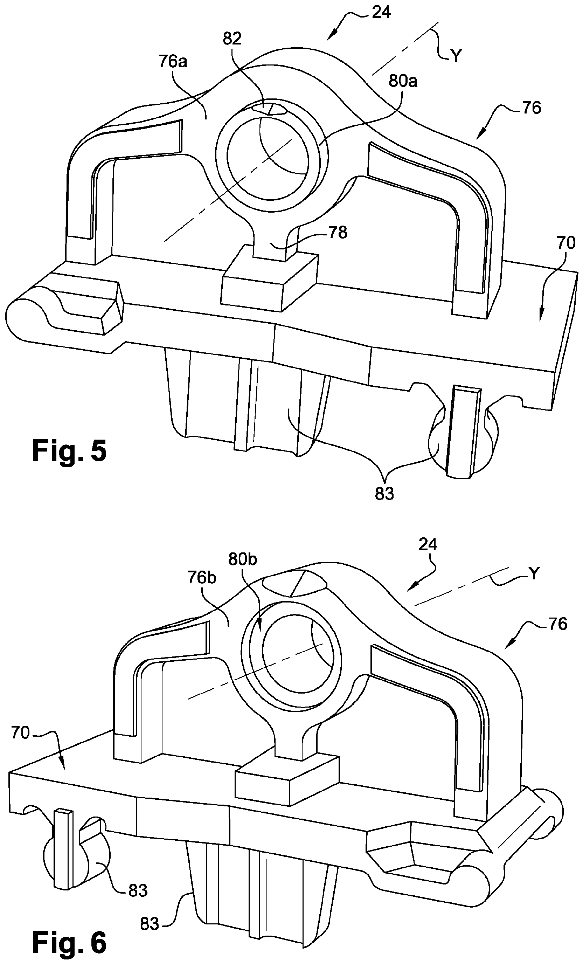

Les figures 5 et 6 illustrent un connecteur 24 selon l'invention, conformément à un deuxième mode de réalisation. Dans ce mode de réalisation, sur lequel les éléments identiques à ceux des figures 4 et 5 portent les mêmes références, le connecteur 24 est agencé pour être rendu solidaire par clipsage du balai 12, par exemple d'une plateforme du balai 12.

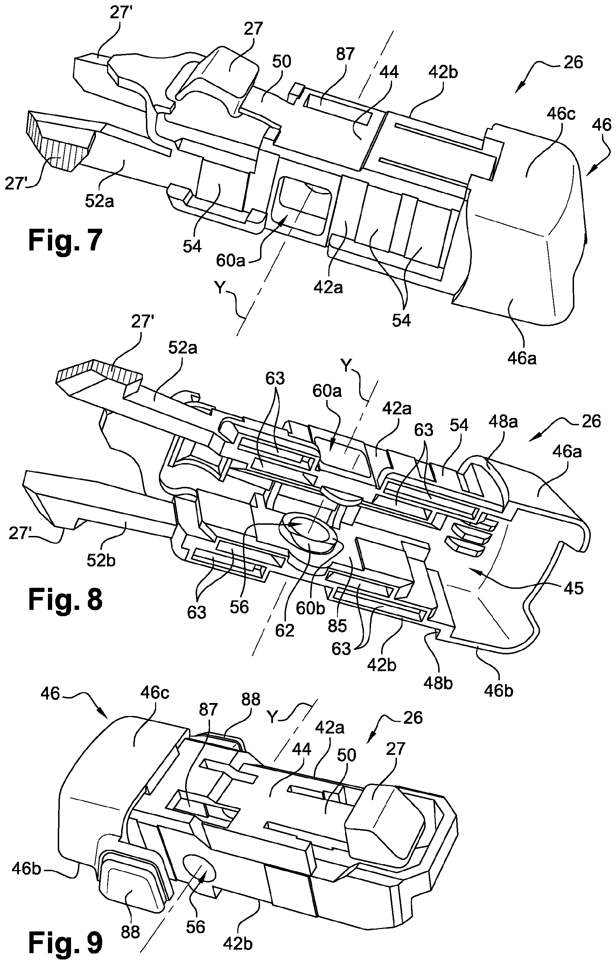

Les figures 7 et 8 illustrent un adaptateur selon l'invention, conformément à un premier mode de réalisation.

L'adaptateur 24 a une forme générale allongée le long de l'axe A (figure 1). Il comprend un corps comportant deux flancs latéraux 42a, 42b sensiblement parallèles entre eux et à l'axe longitudinal A, et à distance l'un de l'autre. Ces flancs 42a, 42b sont reliés entre elles à leurs extrémités supérieures par une paroi transversale supérieure 44 sensiblement perpendiculaire aux flancs 42a, 42b. Les flancs 42a, 42b, 44 ont ici une forme allongée en direction longitudinale.

Les flancs 42a, 42b, 44 de l'adaptateur 26 définissent entre eux un espace longitudinal 45, autrement appelé logement, dans lequel est destinée à être montée une partie du connecteur 24. Les flancs comprennent avantageusement au moins une cavité 63, de manière à alléger la matière et à obtenir un meilleur moulage de l'adaptateur 26.

Le corps de l'adaptateur 26 est relié à une première de ses extrémités longitudinales à un carénage ou capotage 46, également appelé casquette ou tête. Cette tête 46 a une dimension latérale supérieure à celle du corps de l'adaptateur et une hauteur également supérieure à celle du corps. Les flancs latéraux 42a, 42b du corps de l'adaptateur sont ainsi en retrait ou décalés par rapport à des faces latérales externes 46a, 46b de la tête, et sa paroi supérieure 44 est en retrait ou décalée par rapport à une face supérieure externe 46c de la tête.

Les faces latérales 46a, 46b de la tête 46 sont reliées aux flancs latéraux 42a, 42b du corps par des faces arrière latérales 48a, 48b respectivement, qui s'étendent sensiblement perpendiculairement à l'axe longitudinal A. La face supérieure 46c de la tête 46 est reliée à la paroi supérieure 44 du corps par une autre face arrière supérieure qui s'étend également sensiblement perpendiculairement à l'axe longitudinal A.

Les faces arrière 48a, 48b de la tête 46 forment des faces d'appui de l'extrémité extérieure ou avant de la pièce terminale 28. Plus précisément, en position montée de l'adaptateur dans la pièce terminale 28, les bords libres avant des jambes latérales de la pièce terminale sont destinés à venir en appui sur les faces 48a, et le bord libre avant de la paroi transversale de la pièce terminale est destiné à venir en appui sur la face 48b.

La paroi supérieure 44 comprend à son extrémité longitudinale opposée à la tête 46 une languette longitudinale 50.

La languette 50 s'étend longitudinalement du côté opposé à la tête 46, dans le prolongement de la paroi supérieure 44. Elle est élastiquement déformable et est reliée à son extrémité libre extérieure ou avant à un bouton poussoir supérieur 27, qui est ménagé en saillie sur la languette 50. A l'état libre sans contrainte, la languette 50 est telle que le bouton poussoir 27 est situé au-dessus d'un plan passant par la paroi supérieure 44. Les déformations élastiques de la languette 50 ont ici lieu dans un plan longitudinal médian sensiblement vertical, c'est-à-dire sensiblement perpendiculaire à la paroi supérieure 44. L'adaptateur 26 est ainsi équipé d'un bouton poussoir supérieur 27.

Lors du montage de l'adaptateur 26 dans la pièce terminale 28, le bouton poussoir 27 est destiné à s'engager par encliquetage élastique dans une ouverture de la pièce terminale 28 pour verrouiller l'adaptateur vis-à-vis de la pièce terminale 28.

Les flancs latéraux 42a, 42b du corps se prolongent vers l'intérieur par des pattes longitudinales 52a, 52b élastiquement déformables. Chaque flanc 42a, 42b est reliée à une patte 52a, 52b, ces pattes 52a, 52b étant sensiblement parallèles et symétriques par rapport à un plan longitudinal médian, sensiblement vertical, c'est-à-dire perpendiculaire à la paroi supérieure 44 de l'adaptateur. Les extrémités libres des pattes 52a, 52b, qui sont situées du côté opposé à la tête 46, portent chacune un bouton poussoir latéral 27' en saillie. Chaque patte 52a, 52b porte ainsi un bouton poussoir 27". Les déformations élastiques des pattes 52a, 52b ont ici lieu dans un plan longitudinal sensiblement horizontal, c'est-à-dire sensiblement parallèle à la paroi supérieure 44. Les pattes 52a, 52b peuvent être rapprochées l'une de l'autre par déformation élastique. Les boutons poussoirs 27" sont conformés pour coopérer avec des encoches de la pièce terminale 28.

Les flancs latéraux 42a, 42b du corps de l'adaptateur 26 comprennent sur leurs faces externes des nervures 54 sensiblement parallèles entre elles et parallèles à l'axe longitudinal A et espacées les unes des autres. Chaque nervure 54 définit par son sommet une surface plane destinée à coopérer avec la pièce terminale 28 du bras. Ces nervures 54 correspondent ici à des portions de plus grande épaisseur des flancs latéraux 42a, 42b.

Les flancs latéraux 42a, 42b comprennent chacun un orifice traversant 56. Les orifices des flancs 42a, 42b sont sensiblement coaxiaux et définissent ici l'axe Y de pivotement de l'adaptateur 24 sur le connecteur 24, et donc du balai vis-à-vis du bras. Les orifices sont ici à section circulaire et comprennent chacun une surface interne sensiblement cylindrique. Les orifices débouchent à leurs extrémités latérales externes sur les faces externes des flancs 42a, 42b, respectivement, et à leurs extrémités latérales internes dans le logement 45. L'adaptateur 26 est muni d'une cavité 60a qui est l'orifice traversant du flanc 42a.

Une face latérale interne 85 en regard du flanc latéral 42b comprend une protubérance 60b. La protubérance 60b s'étend dans le logement 45. La protubérance 60b présente un plan de symétrie passant par l'axe de pivotement Y et perpendiculaire à l'axe longitudinal A.

La protubérance 60b est trouée et comprend un trou traversant. Ce trou est ici formé par un des orifices précités. La protubérance 60b est ainsi située sur la face interne 85 du flanc latéral 42b de sorte à être traversée par l'orifice de ce flanc.

La protubérance 60b a une forme générale cylindrique et ici tubulaire du fait de l'orifice qui la traverse. L'axe de chaque orifice, qui est confondu avec l'axe de pivotement Y, est également confondu avec l'axe de la protubérance 60b, si bien que l'orifice est centré vis-à-vis de la protubérance. La protubérance 60b forme ainsi un bourrelet annulaire de matière autour de l'orifice, ayant sensiblement une épaisseur radiale par rapport à l'axe de pivotement Y sensiblement constante. La protubérance 60b a une dimension axiale le long de l'axe de pivotement Y qui représente de préférence environ 10 à 20% de la dimension axiale ou largeur du logement le long de l'axe de pivotement Y. La protubérance 60b a un diamètre externe qui représente de préférence environ 60 à 80% de la hauteur du flanc latéral 42b, mesurée dans une direction sensiblement verticale perpendiculaire à la paroi supérieure 44.

Comme cela est visible à la figure 8, la protubérance 60b comprend une partie, ici inférieure, tronquée ou chanfreinée. La partie tronquée ou chanfreinée définit une rampe 62 qui s'étend dans un plan incliné par rapport au flanc latéral 42b. La rampe 62 définit une surface de glissement destinée à coopérer avec le connecteur 24. La rampe 62 de la protubérance 60b est inclinée de sorte qu'elle s'éloigne du plan médian de l'adaptateur 26 du haut vers le bas. L'extrémité inférieure de la rampe 62 s'étend à faible distance, le long de l'axe de pivotement Y, de la face interne 85 du flanc latéral 42b et peut être directement reliée à cette face interne.

L'adaptateur 26 décrit ci-dessus est avantageusement unitaire, c'est-à-dire constitué par une même matière synthétique. Il peut ainsi être fabriqué au cours d'une unique opération de moulage, notamment par injection.

Comme expliqué ci-dessus, l'adaptateur 26 est fixé au connecteur 24 grâce aux protubérances 80a, 60b et aux cavités 60a, 80b qui forment des moyens de fixation de l'adaptateur au connecteur et qui peuvent en outre former des moyens de pivotement ou de rotation de l'adaptateur vis-à-vis du connecteur. Les moyens de fixation sont du type à encliquetage élastique.

L'adaptateur 26 selon ce premier mode de réalisation est adapté pour être solidarisé à un bras à verrouillage latéral (de l'anglais side-lock). L'adaptateur est en effet configuré pour accueillir une pièce terminale comprenant une tige cylindrique s'étendant transversalement sur un côté de la pièce terminale, ainsi qu'un verrou. La tige est destinée à traverser les orifices de l'adaptateur et la cavité du connecteur. Le verrou comprend quant à lui un crochet qui peut être logé dans un orifice 87 de l'adaptateur 26.

L'adaptateur 26 selon l'invention est du type « universel » et est destiné à être monté indifféremment sur des pièces terminales 28 de différents bras, voire sur des bras non équipés de pièces terminales.

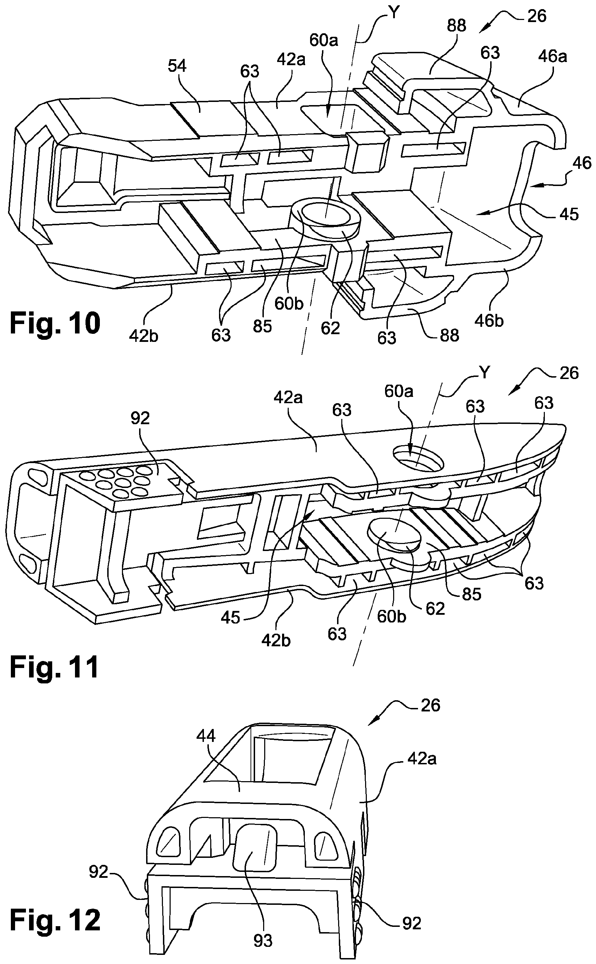

Ainsi, dans un deuxième mode de réalisation, tel qu'illustré aux figures 9 et 10, sur lesquelles les éléments identiques portent les mêmes références, l'adaptateur 26 est configuré pour recevoir une pièce terminale 28 en forme de chape et à section transversale en U. L'adaptateur 26 est également configuré pour être assemblé à un balai à un bras à verrouillage latéral, grâce notamment à l'orifice traversant 56, à l'orifice 87 et aux oreilles 88 de compensation de jeu latéral.

Dans un troisième mode de réalisation, l'adaptateur 26 est configuré pour être assemblé à un bras du type bras tige. Le bras tige peut être monté et démonté de l'adaptateur 26 grâce aux boutons poussoirs 92 et au plot de clipsage 93 (figures 11 et 12).

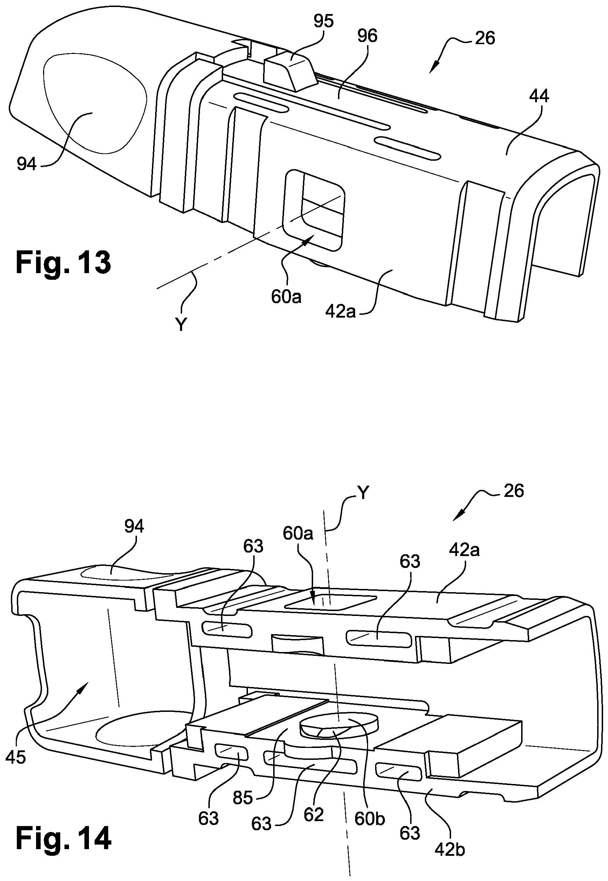

Dans un quatrième mode de réalisation, l'adaptateur 26 est configuré pour recevoir une pièce terminale 28 en forme de chape et à section transversale en U. Il comprend à cet effet un bouton d'actionnement 95 disposé sur une languette 50 et qui est engagé par encliquetage élastique dans un orifice ou une encoche de la pièce terminale 28, à l'aide des boutons poussoirs 94 (figure 13 et 14).

## Revendications

1. Organe (24, 26) pour un système de connexion d'un balai (12) d'essuie-glace à un bras d'entraînement (14), ledit organe (24, 26) étant configuré pour être solidarisé audit balai (12) ou audit bras (14) et comprenant des moyens de rotation (80a, 80b ; 60b, 60a) configurés pour coopérer avec des moyens complémentaires (60a, 60b ; 80b, 80a) d'un autre organe (26, 24) du système de connexion pour définir un axe de rotation (Y) de l'organe (24, 26) vis-à-vis du second organe (26, 24), ledit axe de rotation (Y) étant destiné à être l'axe de rotation dudit balai (12) vis-à-vis dudit bras (14), **caractérisé en ce que** lesdits moyens de rotation (80a, 80b ; 60b, 60a) comprennent une protubérance (80a, 60b), disposée d'un côté du plan longitudinal médian (P) dudit organe (24, 26) et apte à coopérer avec une cavité (60a, 80b) de l'autre organe (26, 24), ainsi qu'une cavité (80b, 60a), disposée de l'autre côté dudit plan (P) et apte à coopérer avec une protubérance (60b, 80a) de l'autre organe (26, 24), l'organe (24, 26) étant asymétrique par rapport audit plan (P).

2. Organe (24, 26) selon la revendication 1, **caractérisé en ce que** la protubérance (80a, 60b) et la cavité (60a, 80b) sont asymétriques par rapport audit plan (P).

3. Organe (24, 26) selon la revendication 1 ou 2, **caractérisé en ce que** la protubérance (80a, 60b) est un axe physique sensiblement cylindrique et que la cavité (60a, 80b) est un logement de forme complémentaire de ladite protubérance (80a, 60b).

4. Organe (24, 26) selon l'une des revendications 1 à 3, **caractérisé en ce que** la protubérance (80a, 60b) comprend un trou traversant (56).

5. Organe (24, 26) selon l'une des revendications 1 à 4, **caractérisé en ce que** ledit organe (24, 26) est un connecteur (24) destiné à être solidarisé au balai (12).

6. Organe (24) selon la revendication 5, **caractérisé en ce qu'**il comprend une embase (70) munie d'une zone (72) de solidarisation à au moins une vertèbre du balai (12).

7. Organe (24) selon la revendication 5, **caractérisé en ce qu'**il comprend une embase (70) munie de moyens (83) de clipsage à une plate-forme du balai (12).

8. Organe (24) selon l'une des revendications 5 à 7, **caractérisé en ce qu'**il comprend une embase (70) surmontée d'un flanc (76), la cavité (80b) étant disposée dans le flanc (76) et la protubérance (80a) étant issue du flanc (76).

9. Organe (24, 26) selon l'une des revendications 1 à 4, **caractérisé en ce que** ledit organe (24, 26) est un adaptateur (26) destiné à être solidarisé au bras d'entraînement (14).

10. Organe (26) selon la revendication 9, **caractérisé en ce qu'**il présente une section en « U » formée par une base et deux flancs latéraux (42a, 42b) délimitant un logement (45), la protubérance (60b) étant issue d'un flanc latéral (42b) et la cavité (60a) étant disposée dans l'autre flanc latéral (42a).

11. Organe (26) selon la revendication 10, **caractérisé en ce que** la protubérance (60b) s'étend dans le logement (45).

12. Organe (26) selon la revendication 10 ou 11, **caractérisé en ce que** la protubérance (60b) comprend une partie (62) tronquée ou chanfreinée.

13. Organe (26) selon l'une des revendications 9 à 12, **caractérisé en ce qu'**il comprend un bouton d'actionnement (27) destiné à être engagé par encliquetage élastique dans un orifice d'une pièce terminale (28) du bras d'entraînement (14).

14. Organe (26) selon l'une des revendications 9 à 13, **caractérisé en ce qu'**il est configuré pour être solidarisé à un bras d'entraînement (14) à pièce terminale à section en « U ».

15. Organe (26) selon l'une des revendications 9 à 13, **caractérisé en ce qu'**il est configuré pour être solidarisé à un bras d'entraînement (14) de type bras tige.

16. Organe (26) selon l'une des revendications 9 à 13, **caractérisé en ce qu'**il est configuré pour être solidarisé à un bras d'entraînement (14) à verrouillage latéral.

17. Système de connexion d'un balai d'essuie-glace (12) à un bras d'entraînement (14), **caractérisé en ce qu'**il comprend au moins un organe (24, 26) selon l'une des revendications 1 à 16.

18. Système de connexion selon la revendication 17, **caractérisé en ce qu'**il comprend un connecteur (24) selon l'une des revendications 5 à 8 et un adaptateur (26) selon l'une des revendications 9 à 16.

19. Balai d'essuie-glace (12) ou bras d'entraînement (14), **caractérisé en ce qu'**il comprend ou porte un organe (24, 26) selon l'une des revendications 1 à 16 ou un système de connexion selon la revendication 17 ou 18.

## Patentansprüche

1. Element (24, 26) für ein Verbindungssystem eines Wischerblatts (12) mit einem Scheibenwischerarm (14), wobei das Element (24, 26) eingerichtet ist, um mit dem Wischerblatt (12) oder dem Arm (14) verbunden zu sein, und umfassend Rotationsmittel (80a, 80b; 60b, 60a), die eingerichtet sind, um mit komplementären Mitteln (60a, 60b; 80b, 80a) eines weiteren Elements (26, 24) des Verbindungssystems zusammenzuwirken, um eine Rotationsachse (Y) des Elements (24, 26) gegenüber dem zweiten Element (26, 24) zu definieren, wobei die Rotationsachse (Y) dazu bestimmt ist, die Rotationsachse des Wischerblattes (12) gegenüber dem Arm (14) zu sein, **dadurch gekennzeichnet, dass** die Rotationsmittel (80a, 80b; 60b, 60a) eine Ausstülpung (80a, 60b), die auf einer Seite der Längsmittelebene (P) des Elements (24, 26) angeordnet und geeignet ist, mit einem Hohlraum (60a, 80b) des anderen Elements (26, 24) zusammenzuwirken, sowie einen Hohlraum (80b, 60a) umfassen, der auf der anderen Seite der Ebene (P) angeordnet und geeignet ist, mit einer Ausstülpung (60b, 80a) des anderen Elements (26, 24) zusammenzuwirken, wobei das Element (24, 26) in Bezug zur Ebene (P) asymmetrisch ist.

2. Element (24, 26) nach Anspruch 1, **dadurch gekennzeichnet, dass** die Ausstülpung (80a, 60b) und der Hohlraum (60a, 80b) in Bezug zur Ebene (P) asymmetrisch sind.

3. Element (24, 26) nach Anspruch 1 oder 2, **dadurch gekennzeichnet, dass** die Ausstülpung (80a, 60b) eine im Wesentlichen zylindrische physische Achse ist, und dass der Hohlraum (60a, 80b) eine Aufnahme von zu der Ausstülpung (80a, 60b) komplementärer Form ist.

4. Element (24, 26) nach einem der Ansprüche 1 bis 3, **dadurch gekennzeichnet, dass** die Ausstülpung (80a, 60b) ein durchgehendes Loch (56) umfasst.

5. Element (24, 26) nach einem der Ansprüche 1 bis 4, **dadurch gekennzeichnet, dass** das Element (24, 26) ein Verbinder (24) ist, der dazu bestimmt ist, mit dem Wischerblatt (12) verbunden zu sein.

6. Element (24) nach Anspruch 5, **dadurch gekennzeichnet, dass** es einen Sockel (70) umfasst, der mit einer Verbindungszone (72) mit mindestens einem Wirbel des Wischerblattes (12) versehen ist.

7. Element (24) nach Anspruch 5, **dadurch gekennzeichnet, dass** es einen Sockel (70) umfasst, der mit Mitteln (83) zum Klippen an eine Plattform des Wischerblattes (12) versehen ist.

8. Element (24) nach einem der Ansprüche 5 bis 7, **dadurch gekennzeichnet, dass** es einen Sockel (70) umfasst, der über einer Seitenfläche (76) montiert ist, wobei der Hohlraum (80b) in der Seitenfläche (76) angeordnet ist, und die Ausstülpung (80a) aus der Seitenfläche (76) hervorgeht.

9. Element (24, 26) nach einem der Ansprüche 1 bis 4, **dadurch gekennzeichnet, dass** das Element (24, 26) ein Adapter (26) ist, der dazu bestimmt ist, mit dem Scheibenwischerarm (14) verbunden zu sein.

10. Element (26) nach Anspruch 9, **dadurch gekennzeichnet, dass** es einen "U-förmigen" Querschnitt aufweist, der von einer Basis und zwei Seitenflächen (42a, 42b) gebildet ist, die eine Aufnahme (45) begrenzen, wobei die Ausstülpung (60b) aus einer Seitenfläche (42b) hervorgeht und der Hohlraum (60a) in der anderen Seitenfläche (42a) angeordnet ist.

11. Element (26) nach Anspruch 10, **dadurch gekennzeichnet, dass** sich die Ausstülpung (60b) in der Aufnahme (45) erstreckt.

12. Element (26) nach Anspruch 10 oder 11, **dadurch gekennzeichnet, dass** die Ausstülpung (60b) einen kegelstumpfartigen oder abgeschrägten Teil (62) umfasst.

13. Element (26) nach einem der Ansprüche 9 bis 12, **dadurch gekennzeichnet, dass** es einen Betätigungsknopf (27) umfasst, der dazu bestimmt ist, durch elastisches Einrasten in eine Öffnung eines Endstücks (28) des Scheibenwischerarms (14) einzugreifen.

14. Element (26) nach einem der Ansprüche 9 bis 13, **dadurch gekennzeichnet, dass** es eingerichtet ist, um mit einem Scheibenwischerarm (14) mit einem Endstück mit "U-förmigem" Querschnitt verbunden zu sein.

15. Element (26) nach einem der Ansprüche 9 bis 13, **dadurch gekennzeichnet, dass** es eingerichtet ist, um mit einem Scheibenwischerarm (14) vom Typ Stangenarm verbunden zu sein.

16. Element (26) nach einem der Ansprüche 9 bis 13, **dadurch gekennzeichnet, dass** es eingerichtet ist, um mit einem Scheibenwischerarm (14) mit seitlicher Verriegelung verbunden u sein.

17. Verbindungssystem eines Wischerblattes (12) mit einem Scheibenwischerarm (14), **dadurch gekennzeichnet, dass** es mindestens ein Element (24, 26) nach einem der Ansprüche 1 bis 16 umfasst.

18. Verbindungssystem nach Anspruch 17, **dadurch gekennzeichnet, dass** es einen Verbinder (24) nach einem der Ansprüche 5 bis 8 und einen Adapter (26) nach einem der Ansprüche 9 bis 16 umfasst.

19. Wischerblatt (12) oder Scheibenwischerarm (14), **dadurch gekennzeichnet, dass** sie ein Element (24, 26) nach einem der Ansprüche 1 bis 16 oder ein Verbindungssystem nach Anspruch 17 oder 18 umfassen oder tragen.

## Claims

1. Element (24, 26) for a system for connecting a windscreen wiper blade holder (12) to a drive arm (14), said element (24, 26) being designed to be rigidly connected to said blade holder (12) or to said arm (14) and including rotation means (80a, 80b; 60b, 60a) designed to cooperate with complementary means (60a, 60b; 80b, 80a) of another element (26, 24) of the connection system to form an axis of rotation (Y) between the element (24, 26) and the second element (26, 24), said axis of rotation (Y) being designed to be the axis of rotation between said blade holder (12) and said arm (14), **characterized in that** said means of rotation (80a, 80b; 60b, 60a) include a protuberance (80a, 60b), which is arranged on one side of the longitudinal mid-plane (P) of said element (24, 26) and is able to cooperate with a cavity (60a, 80b) in the other element (26, 24), and a cavity (80b, 60a), which is arranged on the other side of said plane (P) and is able to cooperate with a protuberance (60b, 80a) on the other element (26, 24), the element (24, 26) being asymmetrical in relation to said plane (P).

2. Element (24, 26) according to Claim 1, **characterized in that** the protuberance (80a, 60b) and the cavity (60a, 80b) are asymmetrical in relation to said plane (P).

3. Element (24, 26) according to Claim 1 or 2, **characterized in that** the protuberance (80a, 60b) is a substantially cylindrical physical shaft and the cavity (60a, 80b) is a seat matching the shape of said protuberance (80a, 60b).

4. Element (24, 26) according to one of Claims 1 to 3, **characterized in that** the protuberance (80a, 60b) has a through-hole (56).

5. Element (24, 26) according to one of Claims 1 to 4, **characterized in that** said element (24, 26) is a connector (24) designed to be rigidly connected to the blade holder (12).

6. Element (24) according to Claim 5, **characterized in that** it includes a base (70) having a zone (72) for rigid attachment to at least one joint of the blade holder (12).

7. Element (24) according to Claim 5, **characterized in that** it includes a base (70) provided with means (83) for clipping to a platform of the blade holder (12).

8. Element (24) according to one of Claims 5 to 7, **characterized in that** it includes a base (70) surmounted by a flank (76), the cavity (80b) being formed in the flank (76) and the protuberance (80a) coming out of the flank (76).

9. Element (24, 26) according to one of Claims 1 to 4, **characterized in that** said element (24, 26) is an adaptor (26) designed to be rigidly connected to the drive arm (14).

10. Element (26) according to Claim 9, **characterized in that** it has a U-shaped section formed by a base and two lateral flanks (42a, 42b) delimiting a seat (45), the protuberance (60b) coming out of a lateral flank (42b) and the cavity (60a) being formed in the other lateral flank (42a).

11. Element (26) according to Claim 10, **characterized in that** the protuberance (60b) extends into the seat (45).

12. Element (26) according to Claim 10 or 11, **characterized in that** the protuberance (60b) includes a shortened or bevelled portion (62).

13. Element (26) according to one of Claims 9 to 12, **characterized in that** it includes an actuating button (27) designed to be engaged by elastic click-fitting into a hole of an end part (28) of the drive arm (14).

14. Element (26) according to one of Claims 9 to 13, **characterized in that** it is designed to be rigidly connected to a drive arm (14) having an end part with a U-shaped section.

15. Element (26) according to one of Claims 9 to 13, **characterized in that** it is designed to be rigidly connected to a rod-arm drive arm (14).

16. Element (26) according to one of Claims 9 to 13, **characterized in that** it is designed to be rigidly connected to a side-lock drive arm (14).

17. Connection system for a windscreen wiper blade holder (12) with a drive arm (14), **characterized in that** it includes at least one element (24, 26) according to one of Claims 1 to 16.

18. Connection system according to Claim 17, **characterized in that** it includes a connector (24) according to one of Claims 5 to 8 and an adaptor (26) according to one of Claims 9 to 16.

19. Windscreen wiper blade holder (12) or drive arm (14), **characterized in that** it includes or carries an element (24, 26) according to one of Claims 1 to 16 or a connection system according to Claim 17 or 18.
